# EUROPEAN PATENT APPLICATION

(11) **EP 4 280 695 A1**
(43) Date of publication of application: **22.11.2023**
(21) Application number: 22752105.1
(22) Date of filing: 21.01.2022
(51) Int. Cl.: H04W 48/08

(54) **WIRELESS NETWORK ACCESS METHOD AND APPARATUS, AND COMPUTER-READABLE STORAGE MEDIUM AND COMPUTER PROGRAM**

(30) Priority: 10.02.2021 CN 202110184070
(71) Applicant: Huawei Technologies Co., Ltd., Shenzhen, Guangdong 518129 (CN)
(72) Inventor: CHANG, Junren, Shenzhen, Guangdong 518129 (CN); LIU, Nannan, Shenzhen, Guangdong 518129 (CN); XIE, Xi, Shenzhen, Guangdong 518129 (CN); LIU, Jianghua, Shenzhen, Guangdong 518129 (CN); BAI, Xin, Shenzhen, Guangdong 518129 (CN)
(74) Representative: Pfenning, Meinig & Partner mbB
(86) International application number: PCT/CN2022/073263
(87) International publication number: WO 2022/170943

(57) **Abstract**

This application provides a wireless network access method and apparatus, a computer-readable storage medium, and a computer program. The method includes: A terminal device obtains a first group of parameters corresponding to a first mode. A network device obtains a second group of parameters corresponding to the first mode, where the first group of parameters correspond to the second group of parameters. When a compatibility problem exists between the terminal device and the network device, the terminal device initiates initial access to the network device based on the first group of parameters, and the network device accepts, based on the second group of parameters, the initial access initiated by the terminal device. In this way, when a compatibility problem exists between the terminal device and the network device, the terminal device can perform initial access based on parameters matching the network device, to reduce a possibility that the terminal device cannot initially access the network device due to the compatibility problem with the network device.

## Description

This application claims priority to Chinese Patent Application No. 202110184070.7, filed with the China National Intellectual Property Administration on February 10, 2021 and entitled "WIRELESS NETWORK ACCESS METHOD AND APPARATUS, COMPUTER-READABLE STORAGE MEDIUM, AND COMPUTER PROGRAM", which is incorporated herein by reference in its entirety.

### TECHNICAL FIELD

This application relates to the field of mobile communication technologies, and in particular, to a wireless network access method and apparatus, a system information updating method and apparatus, a computer-readable storage medium, and a computer program.

### BACKGROUND

In the communication system, when a problem occurs in a process of communication between a terminal device and a network device, even if the problem is caused by incompatibility between the terminal device and the network device, a terminal device manufacturer needs to locate the problem in a traversal manner, which takes a long time. Therefore, a solution is urgently required to efficiently enable the terminal device and the network device to continue to communicate with each other when a problem occurs in a process of communication between the terminal device and the network device due to incompatibility between the terminal device and the network device.

### SUMMARY

In view of the above problems, embodiments of this application provide a solution that can reduce a possibility that a terminal device cannot initially access a network device due to a compatibility problem with the network device and a solution that can reduce a possibility of a compatibility problem between the terminal device and the network device.

According to a first aspect, an embodiment of this application provides a wireless network access method. The method includes: obtaining a first group of parameters corresponding to a first mode. The first group of parameters are predefined parameters. Alternatively, the first group of parameters are parameters used by a terminal device during latest successful initial access to a network device. The method further includes: when a compatibility problem exists between a terminal device and a network device, initiating, based on the first group of parameters, initial access to the network device.

The method may be performed by a terminal device or a communication apparatus that can support the terminal device in implementing a function required by the method, for example, a chip disposed in the terminal device.

According to the method, the terminal device may perform initial access based on a specific parameter, to reduce a possibility that the terminal device cannot initially access the network device due to the compatibility problem with the network device.

In an optional implementation, the compatibility problem includes at least one of the following: The terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

In an optional implementation, the method further includes: The terminal device determines the first group of parameters from at least two groups of parameters based on at least one of the following: a capability of the terminal device, a capability of the network device, a version of the terminal device, and a version of the network device.

According to this implementation, the terminal device may perform initial access based on parameters matching a capability and/or a version, thereby improving performance of accessing the network device by the terminal device based on a specific parameter.

In an optional implementation, the method further includes: receiving first indication information from the network device. The first indication information indicates a first group of parameters. Alternatively, the first indication information indicates that the network device supports initial access of the terminal device in the first mode.

According to this implementation, the network device may indicate which group of parameters are used by the terminal device, or control a switch of the first mode, thereby improving system flexibility.

In an optional implementation, the method further includes: receiving second indication information from the network device. The second indication information indicates that a compatibility problem exists between the terminal device and the network device. Alternatively, the second indication information indicates a reason for a compatibility problem between the terminal device and the network device.

In an optional implementation, the method further includes: sending third indication information to the network device. The third indication information indicates that a compatibility problem exists between the terminal device and the network device. Alternatively, the third indication information indicates a reason for a compatibility problem between the terminal device and the network device.

According to the two implementations, the terminal device and the network device may further communicate with each other about a compatibility problem that occurs, so that a possibility that the terminal device cannot initially access the network device subsequently due to the compatibility problem with the network device can be reduced.

According to a second aspect, a wireless network access method is provided. The method includes: obtaining a second group of parameters corresponding to the first mode. The second group of parameters are predefined parameters. Alternatively, the second group of parameters are parameters used by a network device during latest successful accept of initial access initiated by a terminal device. The method further includes: when a compatibility problem exists between the terminal device and the network device, the terminal device accepts, based on the second group of parameters, initial access initiated by the terminal device.

The method may be performed by a network device or a communication apparatus that can support the network device in implementing a function required by the method, for example, a chip disposed in the network device.

According to the method, the network device may accept initial access of the terminal device based on a specific parameter, to reduce a possibility that the terminal device cannot initially access the network device due to the compatibility problem with the network device.

In an optional implementation, the compatibility problem includes at least one of the following: The terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

In an optional implementation, the method further includes: determining a group of parameters from at least two groups of parameters based on at least one of the following: a capability of the terminal device, a capability of the network device, a version of the terminal device, and a version of the network device.

According to this implementation, the network device may accept initial access of the terminal device based on parameters matching a capability and/or a version, thereby improving performance of accessing the network device by the terminal device based on a specific parameter.

In an optional implementation, the method further includes: sending the first indication information to the terminal device. The first indication information indicates a first group of parameters used by the terminal device during initiation of initial access to the network device in the first mode. The first group of parameters correspond to the second group of parameters. Alternatively, the first indication information indicates that the network device supports initial access of the terminal device in the first mode.

According to this implementation, the network device may indicate which group of parameters are used by the terminal device, or control a switch of the first mode, thereby improving system flexibility.

In an optional implementation, the method further includes: sending second indication information to a terminal device. The second indication information indicates that a compatibility problem exists between the terminal device and the network device. Alternatively, the second indication information indicates a reason for a compatibility problem between the terminal device and the network device.

In an optional implementation, the method further includes: receiving third indication information from the terminal device. The third indication information indicates that a compatibility problem exists between the terminal device and the network device. Alternatively, the third indication information indicates a reason for a compatibility problem between the terminal device and the network device.

According to the two implementations, the terminal device and the network device may further communicate with each other about a compatibility problem that occurs, so that a possibility that the terminal device cannot initially access the network device subsequently due to the compatibility problem with the network device can be reduced.

According to a third aspect, a wireless network access method is provided. The method includes: when a compatibility problem exists between the terminal device and the network device, sending the fourth indication information to the network device. The fourth indication information indicates that a compatibility problem exists between the terminal device and the network device. Alternatively, the fourth indication information indicates a reason for a compatibility problem between the terminal device and the network device. The method further includes: after the terminal device adjusts the parameters used for accepting the initial access of the terminal device, continuing the initial access to the network device.

The method may be performed by a terminal device or a communication apparatus that can support the terminal device in implementing a function required by the method, for example, a chip disposed in the terminal device.

According to the method, the network device may learn that a compatibility problem exists between the terminal device and the network device, and adjust to continue the initial access of the terminal device, thereby reducing a possibility that the terminal device cannot initially access the network device due to the compatibility problem with the network device.

According to a fourth aspect, a wireless network access method is provided. The method includes: receiving the fourth indication information from the terminal device. The fourth indication information indicates that a compatibility problem exists between the terminal device and the network device. Alternatively, the fourth indication information indicates a reason for a compatibility problem between the terminal device and the network device. The method further includes: adjusting parameters used for accepting initial access of the terminal device. The method further includes: continuing accept of the initial access of the terminal device.

The method may be performed by a network device or a communication apparatus that can support the network device in implementing a function required by the method, for example, a chip disposed in the network device.

According to the method, the network device may learn that a compatibility problem exists between the terminal device and the network device, and adjust to continue the initial access of the terminal device, thereby reducing a possibility that the terminal device cannot initially access the network device due to the compatibility problem with the network device.

According to a fifth aspect, a wireless network access method is provided. The method includes: receiving a first message that is after an upgrade or a configuration change from a network device. The method further includes: when the terminal device is incompatible with the first message that is after the upgrade or the configuration change, sending fourth indication information to the network device. The fourth indication information indicates that the terminal device is incompatible with the first message that is after the upgrade or the configuration change. Alternatively, the fourth indication information indicates a reason why the terminal device is incompatible with the first message that is after the upgrade or the configuration change. The method further includes: receiving a first message before an upgrade or a configuration change from a network device.

The method may be performed by a terminal device or a communication apparatus that can support the terminal device in implementing a function required by the method, for example, a chip disposed in the terminal device.

According to the method, when the terminal device is incompatible with the first message that is after the upgrade or the updating, it may receive a first message before the upgrade or the updating, thereby reducing a possibility that the terminal device cannot initially access the network device because the terminal device is incompatible with the first message.

According to a sixth aspect, a wireless network access method is provided. The method includes: sending a first message that is after an upgrade or a configuration change to the terminal device. The method further includes: receiving the fourth indication information from the terminal device. The fourth indication information indicates that the terminal device is incompatible with the first message that is after the upgrade or the configuration change. Alternatively, the fourth indication information indicates a reason why the terminal device is incompatible with the first message that is after the upgrade or the configuration change. The method further includes: sending the first message before the upgrade or the configuration change to the terminal device.

The method may be performed by a network device or a communication apparatus that can support the network device in implementing a function required by the method, for example, a chip disposed in the network device.

According to the method, when the terminal device is incompatible with the first message that is after the upgrade or the updating, it may send a first message before the upgrade or the updating, thereby reducing a possibility that the terminal device cannot initially access the network device because the terminal device is incompatible with the first message.

According to a seventh aspect, a system information updating method is provided. The method includes: receiving updated system information from a network device. The method further includes: determining whether the terminal device is compatible with the updated system information. The method further includes: when determining that the terminal device is incompatible with the updated system information, sending the sixth indication information to the network device. The sixth indication information indicates that the terminal device is incompatible with the updated system information. Alternatively, the sixth indication information indicates a reason why the terminal device is incompatible with the updated system information.

The method may be performed by a terminal device or a communication apparatus that can support the terminal device in implementing a function required by the method, for example, a chip disposed in the terminal device.

According to the method, when the updating of system information is caused by an upgrade or a configuration change of the network device, the terminal device may be incompatibility with the updated system information to the network device, so that the network device may suspend the upgrade or the configuration change, and roll back the system information to the system information before updating. In this way, a possibility that the terminal device cannot initially access the terminal device or cannot maintain the connection to the network device because the updated system information is incompatible with the terminal device is reduced.

According to an eighth aspect, a wireless network access method is provided. The method includes: sending updated system information to the terminal device. The method further includes: receiving sixth indication information from the terminal device. The sixth indication information indicates that the terminal device is incompatible with the updated system information. Alternatively, the sixth indication information indicates a reason why the terminal device is incompatible with the updated system information. The method further includes: determining, based on the sixth indication information, whether to continue sending of the updated system information.

The method may be performed by a network device or a communication apparatus that can support the network device in implementing a function required by the method, for example, a chip disposed in the network device.

According to the method, when the updating of system information is caused by an upgrade or a configuration change of the network device, the terminal device may be incompatibility with the updated system information to the network device, so that the network device may suspend the upgrade or the configuration change, and roll back the system information to the system information before updating. In this way, a possibility that the terminal device cannot initially access the terminal device or cannot maintain the connection to the network device because the updated system information is incompatible with the terminal device is reduced.

According to a ninth aspect, a communication apparatus is provided. The apparatus may include a module, for example, a processing module and a transceiver module, configured to perform the method in any one of the first aspect, the third aspect, the fifth aspect, and the seventh aspect, or any optional implementations thereof. The transceiver module may include a sending module and a receiving module. The sending module and the receiving module may be different functional modules, or may be a same functional module but be able to implement different functions. The processing module may be implemented through a processor. The transceiver module may be implemented through a transceiver. Correspondingly, the sending module may be implemented through a transmitter, and the receiving module may be implemented through a receiver. If the apparatus is a terminal device, the transceiver may be a radio frequency transceiver component in the terminal device. If the apparatus is a chip disposed in a terminal device, the transceiver may be a communication interface in the chip, and the communication interface is connected to a radio frequency transceiver component in the terminal device, so as to implement information sending and receiving through the radio frequency transceiver component.

According to a tenth aspect, a communication apparatus is provided. The apparatus may include a module, for example, a processing module and a transceiver module, configured to perform the method in any one of the second aspect, the fourth aspect, the sixth aspect, and the eighth aspect, or any optional implementations thereof. The transceiver module may include a sending module and a receiving module. The sending module and the receiving module may be different functional modules, or may be a same functional module but be able to implement different functions. The processing module may be implemented through a processor. The transceiver module may be implemented through a transceiver. Correspondingly, the sending module may be implemented through a transmitter, and the receiving module may be implemented through a receiver. If the apparatus is a network device, the transceiver may be a radio frequency transceiver component in the network device. If the apparatus is a chip disposed in a network device, the transceiver may be a communication interface in the chip, and the communication interface is connected to a radio frequency transceiver component in the network device, so as to implement information sending and receiving through the radio frequency transceiver component.

According to an eleventh aspect, a communication system is provided. The communication system includes the terminal device according to the ninth aspect and the network device according to the tenth aspect.

According to a twelfth aspect, a computer-readable storage medium is provided. The computer-readable medium stores a computer program which, when runs on a computer, causes the computer to perform the method in any one of the first aspect, the third aspect, the fifth aspect, and the seventh aspect, or any optional implementation thereof.

According to a thirteenth aspect, a computer-readable storage medium is provided. The computer-readable medium stores a computer program which, when runs on a computer, causes the computer to perform the method in any one of the second aspect, the fourth aspect, the sixth aspect, and the eighth aspect, or any optional implementation thereof.

According to a fourteenth aspect, a computer program product is provided. The computer program product includes a computer program which, when runs on a computer, causes the computer to perform the method in any one of the first aspect, the third aspect, the fifth aspect, and the seventh aspect, or any optional implementation thereof.

According to a fifteenth aspect, a computer program product is provided. The computer program product includes a computer program which, when runs on a computer, causes the computer to perform the method in any one of the second aspect, the fourth aspect, the sixth aspect, and the eighth aspect, or any optional implementation thereof.

### BRIEF DESCRIPTION OF DRAWINGS

FIG. 1 is a schematic diagram of a communication system applicable to this application;
FIG. 2A and FIG. 2B are schematic diagrams of a process in which a terminal device performs initial access;
FIG. 3 is a schematic flowchart of a wireless network access method;
FIG. 4 is a schematic flowchart of another wireless network access method;
FIG. 5 is a schematic diagram of a process in which a network device updates system information;
FIG. 6 is a schematic flowchart of a system information updating method;
FIG. 7a and FIG. 7b are schematic diagrams of another process in which a network device updates system information;
FIG. 8 is a schematic flowchart of another system information updating method;
FIG. 9a and FIG. 9b are schematic diagrams of still another process in which a network device updates system information;
FIG. 10 is a schematic block diagram of a communication apparatus;
FIG. 11 is a schematic structural diagram of a network device; and
FIG. 12 is a schematic structural diagram of a terminal device.

### DESCRIPTION OF EMBODIMENTS

The technical solutions provided in this application may be applied to various communication systems, for example, a long term evolution (long term evolution, LTE) system, a new radio (new radio, NR) system, or another communication system that may appear in the future.

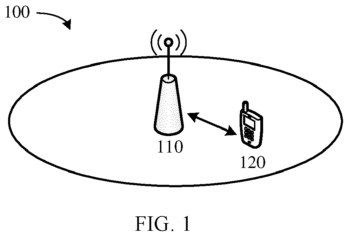

FIG. 1 is a schematic diagram of a communication system applicable to this application. As shown in FIG. 1, the communication system 100 may include at least one network device, for example, the network device 110 shown in FIG. 1. The communication system 100 may further include at least one terminal device, for example, the terminal device 120 shown in FIG. 1. The terminal device 120 may access a network by communicating with the network device 110. The terminal device in embodiments of this application may be user equipment (user equipment, UE), an access terminal, subscriber unit, a subscriber station, a mobile station, a mobile console, a remote station, a remote terminal, a mobile device, a user terminal, a terminal, a wireless communication apparatus, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

The network device in embodiments of this application may be a device configured to directly or indirectly communicate with a terminal device. The network device may be a base station (base station), an evolved base station (evolved NodeB, eNodeB), a transmission reception point (transmission reception point, TRP), a next generation base station (next generation NodeB, gNB) in a 5G mobile communication system, a base station in a future mobile communication system, an access node in a Wi-Fi system, or the like. Alternatively, the network device may be a module or a unit that implements some functions of the base station, for example, may be a central unit (central unit, CU) or a distributed unit (distributed unit, DU). For another example, the network device may further be a radio controller, a relay station, an access point, a vehicle-mounted device, a wearable device, an access network device in another future evolved communication system in a cloud radio access network (cloud radio access network, CRAN) scenario. Alternatively, the network device may be a network element that processes a control plane message of the network in a core network architecture, for example, an access and mobility management function (access and mobility management function, AMF). A specific technology and a specific device form used by a network device are not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), a memory (also referred to as a main memory), and the like. The operating system may be any one or more type of computer operating systems, for example, a Linux operating system, a Unix operating system, an Android operating system, an iOS operating system, or a Windows operating system, that implement service processing through a process (process). The application layer includes applications such as a browser, an address book, word processing software, and instant messaging software. In addition, a specific structure of an execution body of a method provided in embodiments of this application is not specifically limited in embodiments of this application, provided that communication can be performed according to the method provided in embodiments of this application by running a program that records code of the method provided in embodiments of this application.

Conventionally, network configuration and communication process management depend on a network device, which controls configuration of most or even all parameters. Generally, after a problem occurs in a process of communication between a terminal device and a network device, a terminal device manufacturer traverses various possible problems to locate and resolve the problem, which takes a long time. However, in actual problem handling, the terminal device manufacturers find that a considerable number of problems are caused by incompatibility between a terminal device and a network device, and even some problems may occur repeatedly on different network devices for a long time. For example, when a terminal device communicates with a network device, problems such as an access failure or a registration failure often occur. In some scenarios, such problems are caused by incompatibility between a terminal device and a network device. However, before such problems are correctly located, the terminal device cannot predict whether such problems are caused by incompatibility between a terminal device and a network device, so it usually very inefficient at solving problems.

Therefore, a new solution needs to be introduced, so that even when a compatibility problem exists between the terminal device and the network device, the terminal device can still initially access the network device, or a compatibility problem between the terminal device and the network device can be avoided to some extent. This application provides a plurality of solutions, which are separately described below through Embodiment 1 to Embodiment 4. Some of these solutions are only for some procedures in a process in which the terminal device initially accesses the network device, some may be applied to any one or more procedures in a process in which the terminal device initially accesses the network device, and some may be further applied to a process in which the terminal device re-accesses the network device or keeps a connection with the network device after initially accessing the network device. It should be understood that these solutions may be used in combination with each other. For example, during access to the network device by the terminal device, a solution may be used in a process, and another solution may be used in another process. Alternatively, during access to the network device by the terminal device, a solution and another solution both may be used in a process.

Embodiment 1 and Embodiment 2 are applicable to a process in which a terminal device performs initial access. Before the technical solutions provided in this application are described, a process in which the terminal device performs initial access is first described as an example. The technical solutions provided in this application may be applied to a process described below. It should be understood that a process in which the terminal device performs initial access may change with evolution of the technical solution, and the technical solution provided in this application is not limited to the process described below.

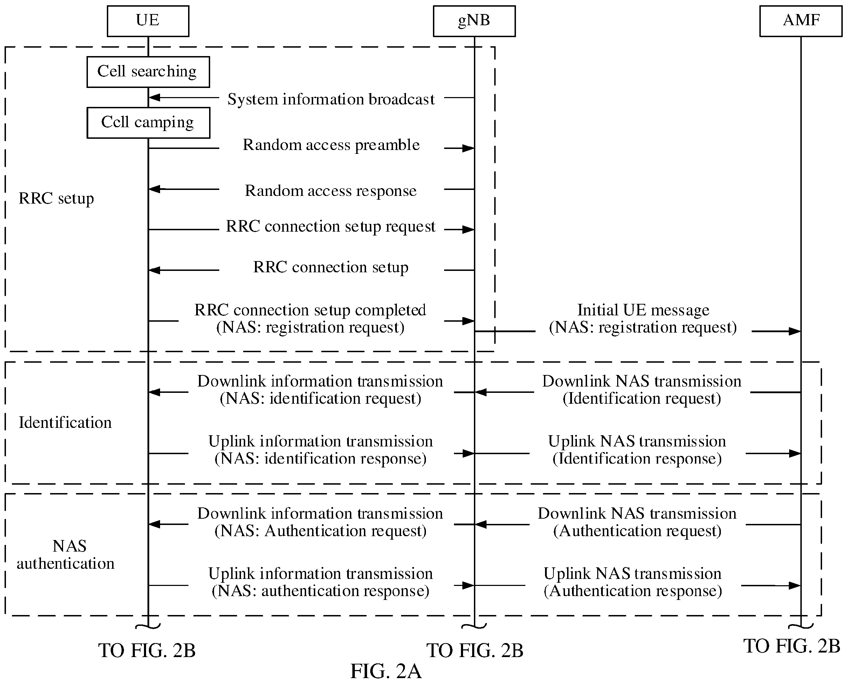

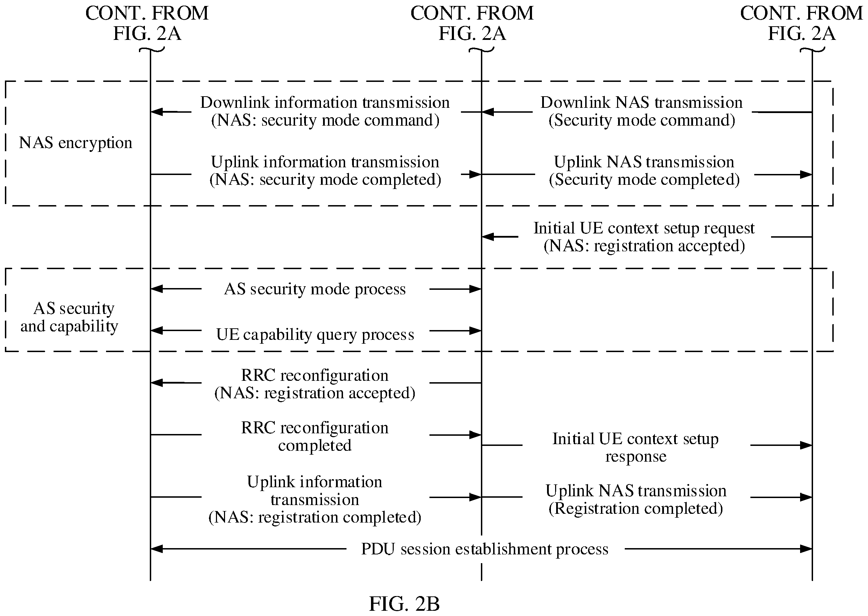

FIG. 2A and FIG. 2B are schematic diagrams of a process in which a terminal device performs initial access. The following uses an example in which the terminal device is UE, and the network device is a gNB and an AMF for description.
(1) The UE performs initial cell searching (cell searching), to implement downlink time-frequency synchronization with the gNB and obtain a serving cell identity (identity, ID).
(2) The UE receives the system information broadcast of the gNB, to obtain necessary information for accessing a network, and the like.
(3) The UE performs cell camping (cell camping) by using the acquired system information.
(4) The UE sends a random access preamble (random access preamble) to the gNB based on a random access channel (random access channel, RACH) parameter obtained by using system information.
(5) After receiving the random access preamble, the gNB sends an RAR message to the UE in a random access response (random access response, RAR) time window (window). The RAR message includes uplink timing, signaling radio bearer (signaling radio bearer, SRB) 0 configuration, and the like.
(6) After receiving the RAR, the UE sends a radio resource control (radio resource control, RRC) connection setup request (RRC connection setup request) message to the gNB on the SRB0.
(7) After receiving the RRC connection setup request, the gNB sends an RRC connection setup (RRC connection setup) message to the LTE on the SRB0. The RRC connection setup message includes the SRB1 configuration and the like.
(8) After receiving the RRC connection setup message, the UE sends an RRC connection setup completed (RRC connection setup complete) message to the gNB on the SRB1. The RRC connection setup completed message includes a non-access stratum (non-access stratum, NAS) message: a registration request (registration request) message.
   (1) to (8) may be referred to as an RRC connection establishment process.
(9) After receiving the RRC connection setup completed message, the gNB sends an initial (initial) UE message to the AMF, to forward the registration request message in the RRC connection setup completed message.
(10) After receiving the initial LTE message, the AMF sends a downlink NAS transmission (transport) message to the gNB. The downlink NAS transmission message includes a NAS message: an identity request (identity request) message.
(11) After receiving the identity request message, the gNB sends a downlink information transfer (transfer) message to the UE, where the downlink information transfer message includes the identity request message.
(12) After receiving the identity request message, the LTE sends an uplink information transmission message to the gNB, where the uplink information transmission message includes a NAS message: an identity response (identity response) message.
(13) After receiving the identity response message, the gNB sends an uplink NAS transmission message to the AMF, where the uplink NAS transmission message includes the identity response message.
   The foregoing (10) to (13) may be referred to as an identity identification process.
(14) After receiving the identity response message, the AMF sends a downlink NAS transmission message to the gNB. The downlink NAS transmission message includes a NAS message: an authentication request (authentication request) message.
(15) After receiving the authentication request message, the gNB sends a downlink information transmission message to the LTE, where the downlink information transmission message includes the authentication request message.
(16) After receiving the authentication request message, the UE sends an uplink information transmission message to the gNB, where the uplink information transmission message includes a NAS message: an authentication response (authentication response) message.
(17) After receiving the authentication response message, the gNB sends an uplink NAS transmission message to the AMF, where the uplink NAS transmission message includes the authentication response message.
   The foregoing (14) to (17) may be referred to as a NAS authentication process.
(18) After receiving the authentication response message, the AMF sends a downlink NAS transmission message to the gNB. The downlink NAS transmission message includes a NAS message: a security mode command (security mode command) message.
(19) After receiving the security mode command message, the gNB sends a downlink information transmission message to the LTE, where the downlink information transmission message includes the security mode command message.
(20) After receiving the security mode command message, the UE sends an uplink information transmission message to the gNB, where the uplink information transmission message includes a NAS message: a security mode completed (security mode complete) message.
(21) After receiving the security mode completed message, the gNB sends an uplink NAS transmission message to the AMF, where the uplink NAS transmission message includes the security mode completed message.
   (18) to (21) may be referred to as a NAS encryption process.
(22) The AMF sends an initial UE context setup request (initial UE context setup request) message to the gNB. The initial context setup request message includes a NAS message: a registration accept (registration accept) message.
(23) After receiving the initial context setup request message, the gNB initiates an access stratum (access stratum, AS) security mode (security mode) procedure to the LTE to forward the registration accept message to the UE.
(24) The gNB initiates a UE capability query procedure to the UE to obtain the UE capability.
   (23) and (24) may be referred to as an AS security and capability procedure.
(25) The gNB sends an RRC reconfiguration (RRC reconfiguration) message to the UE. The RRC reconfiguration message includes an SRB2 configuration and setup accept message.
(26) After receiving the RRC reconfiguration message, the UE sends an RRC reconfiguration completed (RRC reconfiguration complete) message to the gNB.
(27) After receiving the RRC reconfiguration completed message, the gNB sends an initial UE context setup response (initial UE context setup complete) message to the AMF.
(28) The UE sends an uplink information transmission message to the gNB, where the uplink information transmission message includes a NAS message: a registration completed (registration complete) message.
(29) After receiving the registration completed message, the gNB sends an uplink NAS transmission message to the AMF, where the uplink NAS transmission message includes the registration completed message.
(30) The UE initiates a protocol data unit (protocol data unit, PDU) session establishment procedure to the AMF.

In many of the foregoing processes, initial access performed by the terminal device may fail due to a compatibility problem between the terminal device and the network device. A compatibility problem between a terminal device and a network device may be caused by a network device upgrade or a configuration change. For example, a gNB upgrade or a configuration change may cause an upgrade or a configuration change to key system information, and the system information after the upgrade or the configuration change may not be decoded by the LTE or supported by the LTE, thereby causing a LTE access failure. Alternatively, an AMF upgrade or configuration change may cause an updating of key signaling, for example, a registration accept message. The UE may fail to parse signaling after the upgrade or the configuration change, thereby causing a registration failure. In addition, the compatibility problem between the terminal device and the network device may also be caused by terminal device upgrade or configuration change. For example, when the AMF capability is limited, registration of a high-capability UE may be rejected. Alternatively, the gNB may not support a high-capability UE, thereby causing the access or registration of the LTE to be rejected. Alternatively, the gNB may fail to parse the capability of the terminal device, thereby causing an access failure of the UE.

### Embodiment 1

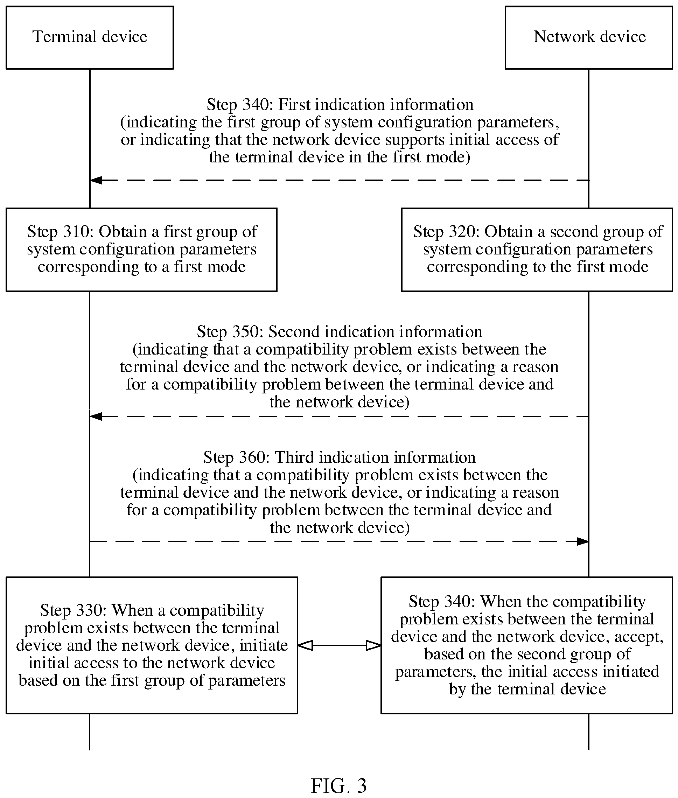

FIG. 3 is a schematic flowchart of a wireless network access method. The method includes step 310, step 320, and step 330. The steps shown in FIG. 3 are described below.

In step 310, a terminal device obtains a first group of parameters corresponding to a first mode. Correspondingly, in step 320, a network device obtains a second group of parameters corresponding to the first mode.

The first mode is a mode in which the terminal device accesses the network device, and may be referred to as a safe mode (safe mode), a basic mode, a protection mode, a compatible mode, or the like. It should be understood that the safe mode (safe mode) herein is different from the security mode (security mode) mentioned in the foregoing description of the initial access process of the terminal device. The safe mode (safe mode) indicates, in terms of configuration compatibility between the terminal device and the network device, that configurations between the terminal device and the network device are compatible with each other. The compatibility herein may be understood as alignment. The security mode (security mode) indicates, interms of communication encryption and decryption, and integrity protection, that data in a communication process is confidential and not tampered with.

When the terminal device initially accesses the network device in the first mode, all functions after the terminal device initially accesses the network in a normal case may be implemented, or only a part of functions may be implemented. For example, the terminal device and the network device can communicate with each other about a compatibility problem that occurs. Then, the terminal device and the network device may exit the first mode, and perform initial access again based on a normal procedure. Because a basic service such as a short messaging service (short messaging service, SMS) may carry key information, for example, a verification code, functions that support such type of services may be implemented in the first mode. In addition, in the first mode, the terminal device may have a specific multicast receiving function, for example, a system upgrade or a protocol upgrade service. The first mode may correspond to a group of parameters used by the terminal device to receive multicast, and the terminal device may receive, through the group of parameters, the multicast service in the first mode delivered by the network device.

That the first mode corresponds to the first group of parameters and the second group of parameters may be understood as follows: When the terminal device is in the first mode, the terminal device may initiate initial access to the network device by using the first group of parameters; and when the network device is in the first mode, the network device may accept, by using the second group of parameters, initial access initiated by the terminal device. The first group of parameters and the second set of parameters may be predefined parameters. For example, the parameter corresponding to the first mode may be pre-stored in the network device and the terminal device in a manner such as factory default or subsequent upgrade. Alternatively, the first group of parameters may be parameters used by the terminal device during latest successful access to the network device, and the second group of parameters may be parameters used by the network device during latest successful accept of initial access initiated by the terminal device.

The first group of parameters correspond to the second group of parameters. For example, the first group of parameters are partially the same as the second group of parameters. The correspondence herein may mean that the terminal device that uses the first group of parameters matches the network device that uses the second group of parameters. In other words, when the terminal device uses the first group of parameters to initiate initial access to the network device, and the network device uses the second group of parameters to accept the initial access initiated by the terminal device, the terminal device can initially access the network device successfully in a normal case.

The first mode may correspond to a plurality of groups of parameters used by the terminal device and a plurality of groups of parameters used by the network device. For example, the first mode corresponds to a plurality of groups of predefined parameters used by the terminal device and a plurality of groups of predefined parameters used by the network device. For another example, the first mode corresponds to at least one group of predefined parameters used by the terminal device, at least one group of predefined parameters used by the network device, parameters used by the terminal device during latest successful access to the network device, and parameters used by the network device during latest successful accept of initial access initiated by the terminal device. Each group of parameters may include a part of parameters that need to be used when the terminal device initiates initial access to the network device or the network device accepts the initial access initiated by the terminal device, for example, a RACH parameter, a search space (search space) parameter, a control resource set (control resource set, CORESET) parameter, an initial bandwidth part (bandwidth part, BWP) parameter, and an SRB0/1/2 parameter that are dedicated to the first mode.

When the first mode corresponds to a plurality of groups of parameters, for how to determine which group of parameters in the plurality of groups of parameters are to be used, the network device may indicate the terminal device to use the first group of parameters in the plurality of groups of parameters. For example, the network device may broadcast, in a cell, default parameters or parameters used during latest successful access are used in the first mode. Alternatively, the terminal device may independently choose to use the first group of parameters from the plurality of groups of parameters. Both the network device and the terminal device may determine the first group of parameters based on at least one of the following items: a capability of the terminal device, a version (release) of the terminal device, and a version of the network device. Each group of parameters may have a correspondence with a capability of the terminal device, a version of the terminal device, and/or a version of the network device. The network device may directly configure, for the terminal device, a parameter appropriate to the capability and/or version of the terminal device, or may indicate the terminal device to use a parameter appropriate to the capability and/or version of the terminal device.

In step 330, when a compatibility problem exists between the terminal device and the network device, the terminal device initiates initial access to the network device based on the first group of parameters. Correspondingly, in step 340, when the compatibility problem exists between the terminal device and the network device, the network device accepts, based on the second group of parameters, initial access initiated by the terminal device.

A compatibility problem between the terminal device and the network device may also be referred to as: The terminal device has a compatibility problem, or the network device has a compatibility problem. Regardless of which expression is used, essentially, a compatibility problem between the terminal device and the network device is caused by a mismatch between a configuration of the terminal device and a configuration of the network device. For example, the terminal device cannot correctly identify a message sent by the network device, or the network device cannot correctly identify a message sent by the terminal device.

The compatibility problem may include at least one of the following: The terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

The initiating, by the terminal device, initial access to the network device based on the first group of parameters may include: When the network device is a base station (for example, a gNB), the terminal device establishes a connection to the base station based on the first group of parameters; and when the network device is a core network device (for example, an AMF), the terminal device initiates a registration request to the network device based on the first group of parameters. The terminal device may first enter the first mode, and then initiate initial access to the network device in the first mode, or first use the first group of parameters, and then initiate initial access to the network device when the first group of parameters are used. Correspondingly, the accepting, by the network device, based on the first group of parameters, the initial access initiated by the terminal device may include: When the network device is a base station (for example, a gNB), the base station establishes a connection to the terminal device based on the first group of parameters; and when the network device is a core network device (for example, an AMF), the core network device accepts, based on the first group of parameters, the registration request initiated by the terminal device. The network device may first enter the first mode, and then accept initial access of the terminal device in the first mode, or first use the second group of parameters, and then accept initial access of the terminal device when the second group of parameters are used. The network device may enter the first mode or use the second group of parameters only for the terminal device. To be specific, the network device may accept, in a normal manner, initial access initiated by another terminal device, or may enter the first mode for another terminal device but accept, by using another parameter, initial access initiated by another terminal device.

The method may further include step 340. In step 340, the network device sends first indication information to the terminal device. Correspondingly, the terminal device receives the first indication information. The first indication information indicates a first group of parameters. The indicating the first group of parameters may be understood as indicating, by the foregoing network device, a specific group of parameters to be used by the terminal device. Alternatively, the first indication information indicates that the network device supports initial access of the terminal device in the first mode. The indicating that the network device supports initial access of the terminal device in the first mode may be understood as: The first mode is available. The network device may implement switching of the first mode by using information indicating that the first mode is available and information indicating that the first mode is unavailable.

The network device may detect that a compatibility problem exists between the network device and the terminal device, and notify the terminal device that the compatibility problem occurs. In view of this, the method may further include step 350. In step 340, the network device sends the second indication information to the terminal device. Correspondingly, the terminal device receives second indication information.

The second indication information may indicate that a compatibility problem exists between the terminal device and the network device. The indicating that a compatibility problem exists between the terminal device and the network device may be understood as enabling the terminal device to learn that a compatibility problem exists between the terminal device and the network device, but does not specify a specific compatibility problem. Certainly, the second indication information may also be used for indicating the terminal device to perform initial access by using the first mode or the first group of parameters, or indicating that the terminal device enters the first mode, or indicating the network device to accept, by using the first mode, initial access initiated by the terminal device. This manner may be understood as implicitly enabling the terminal device to learn that a compatibility problem exists between the terminal device and the network device.

Alternatively, the second indication information may indicate a reason for a compatibility problem between the terminal device and the network device. The indicating a reason for a compatibility problem between the terminal device and the network device may be understood as enabling the terminal device to learn of a specific compatibility problem. Reasons for a compatibility problem between the terminal device and the network device may be classified into different types, and correspondences between these types and indexes (index) may be prestored in the network device and the terminal device. The network device may determine the type of the reason for a compatibility problem between the network device and the terminal device, and send an index of this category to the terminal device as the second indication information.

In addition, the terminal device may also detect that a compatibility problem exists between the terminal device and the network device, and notify the network device that the compatibility problem occurs. In view of this, the method may further include step 360. In step 360, the terminal device sends third indication information to the network device. Correspondingly, the network device receives the third indication information.

The third indication information is similar to the foregoing second indication information in terms of functions, but may be different in specific forms. For example, the third indication information may indicate that a compatibility problem exists between the terminal device and the network device in different manners, or indicate a reason why a compatibility problem exists between the terminal device and the network device in different manners. The third indication information and the foregoing second indication information may also be carried in different messages.

The second indication information and/or the third indication information may be carried in RRC signaling, medium access control (medium access control, MAC) layer signaling, or physical layer signaling. In addition, the first mode may further correspond to a parameter of another radio access technology (radio access technology, RAT) of the terminal device, for example, a parameter of LTE or Wi-Fi. The terminal device and/or the network device may use these parameters to access a network by using another RAT, to feed back a compatibility problem by using another reporting procedure.

In addition, the third indication information may alternatively be a random access preamble sent by the terminal device on a physical random access channel (physical random access channel, PRACH) resource dedicated to the first mode (the third indication information is represented by using a PRACH resource dedicated to the first mode), or may be a random access preamble that is sent by the terminal device and that is generated based on a random access preamble sequence dedicated to the first mode (the third indication information is represented by using a random access preamble sequence dedicated to the first mode).

By applying the method in this embodiment, the terminal device and the network device may re-perform initial access based on a specific parameter, to reduce a possibility that the terminal device cannot initially access the network device due to the compatibility problem with the network device. In addition, the terminal device and the network device may further communicate with each other about a compatibility problem that occurs, so that a possibility that the terminal device cannot initially access the network device subsequently due to the compatibility problem with the network device can be reduced.

In this embodiment, in a process in which the terminal device initially accesses the network device, regardless of which processing in which a compatibility problem occurs, the method in this embodiment may be applied to perform initial access again in the first mode. The entire initial access process may be performed in the first mode, or only a part of the initial access process may be performed in the first mode. For example, after the terminal device and the network device reach a consensus on a compatibility problem that occurs, the problem may be resolved, so that a normal initial access process can be performed.

### Embodiment 2

The main difference between Embodiment 2 and Embodiment 1 lies in that: In Embodiment 1, when a compatibility problem exists, the terminal device re-performs initial access by using another set of parameters. In Embodiment 2, when a compatibility problem exists, the terminal device notifies the network device and expects the network device to perform an adjustment, and then attempts to perform failure processing again to continue initial access.

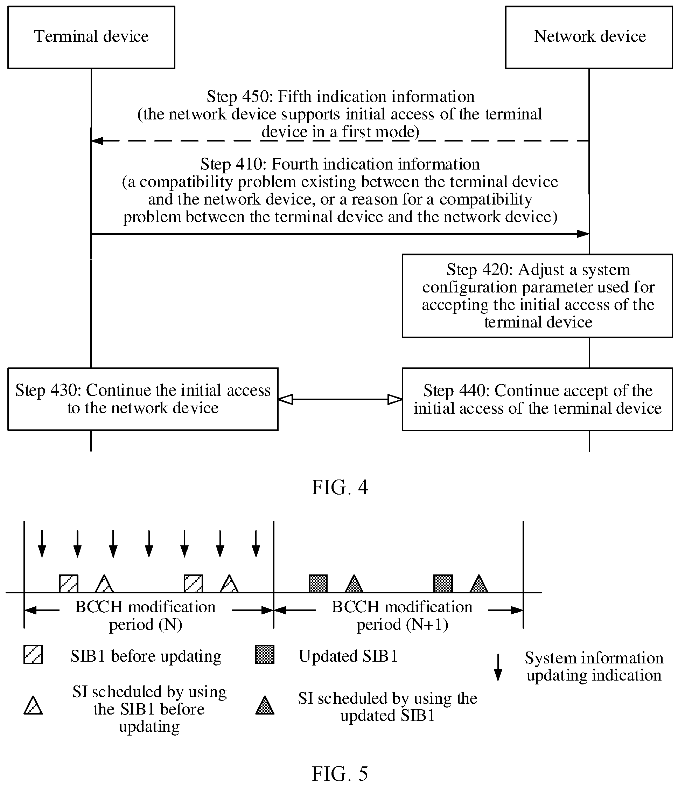

FIG. 4 is a schematic flowchart of another wireless network access method. The method includes step 410, step 420, step 430, and step 440. The steps shown in FIG. 4 are described below. It should be understood that, because some terms and processing in Embodiment 2 are similar to some terms and processing in Embodiment 1, similar terms or processing are not repeatedly described below.

In step 410, when a compatibility problem exists between the terminal device and the network device, the terminal device sends fourth indication information to the network device. Correspondingly, the network device receives the fourth indication information. For a case in which it may be considered that a compatibility problem exists between the terminal device and the network device, refer to the description in step 330.

The fourth indication information may indicate that a compatibility problem exists between the terminal device and the network device. Alternatively, the fourth indication information may indicate a reason for a compatibility problem between the terminal device and the network device. For details about how to indicate that a compatibility problem exists between the terminal device and the network device or a reason thereof, refer to descriptions in step 350 and step 360.

Similar to the third indication information, the fourth indication information may be carried in RRC signaling, media access control (medium access control, MAC) layer signaling, or physical layer signaling. In addition, the terminal device may access a network by using another RAT, to feed back a compatibility problem by using another reporting procedure.

In addition, the fourth indication information may be a random access preamble sent by the terminal device on a PRACH resource dedicated for reporting a compatibility problem (the fourth indication information is represented by a PRACH resource dedicated to reporting a compatibility problem), or may be a random access preamble that is sent by the terminal device and that is generated based on a random access preamble sequence dedicated for reporting a compatibility problem (the fourth indication information is represented by using a random access preamble sequence dedicated to reporting a compatibility problem).

In step 420, the network device adjusts a parameter used to accept initial access of the terminal device.

The network device may first determine whether a parameter used to accept initial access of the terminal device needs to be adjusted. It is possible that the terminal device considers that the initial access failure is caused by a compatibility problem between the terminal device and the network device, but the network device finds that this is not the case. Actually, the terminal device cannot access the network device due to an incompatibility reason, for example, the terminal device is in arrears, or the terminal device needs to perform a system upgrade. In this case, the network device does not need to adjust the parameter used to accept the initial access of the terminal device, and may further notify the terminal device of an actual reason that affects the initial access of the terminal device to the network.

In step 430, the terminal device continues the initial access to the network device. Correspondingly, in step 440, the network device continues accept of the initial access of the terminal device. For an understanding of performing the initial access to the network device and accepting the initial access of the terminal device, refer to the descriptions in the foregoing steps 330 and 340.

The network device may send the indication information to the terminal device, to notify the terminal device that the network device has adjusted the parameter used to accept initial access of the terminal device, or indicate the terminal device to continue the initial access, and the terminal device continues the initial access to the network device based on the indication of the network device. Alternatively, the terminal device may attempt to continue the initial access to the network device after waiting for predetermined duration.

The method may further include step 450. In step 450, the network device sends fifth indication information to the terminal device. Correspondingly, the terminal device receives the fifth indication information. The fifth indication information indicates that the network device supports initial access of the terminal device in the second mode. The second mode is similar to the first mode, and may also be referred to as a safe mode, a basic mode, a protection mode, a compatible mode, or the like. The terminal device may learn, by using the fifth indication information, that the compatibility problem feedback can be performed. Indicating that the network device supports initial access of the terminal device in the second mode may be understood as: The second mode is available. The network device may implement the switch of the second mode by using information indicating that the second mode is available and information indicating that the third mode is unavailable.

By applying the method in this embodiment, the network device may learn that a compatibility problem exists between the terminal device and the network device, and adjust to continue the initial access of the terminal device, thereby reducing a possibility that the terminal device cannot initially access the network device due to the compatibility problem with the network device. In addition, the terminal device and the network device may further communicate with each other about a compatibility problem that occurs, so that a possibility that the terminal device cannot initially access the network device subsequently due to the compatibility problem with the network device can be reduced.

In this embodiment, in a process in which the terminal device initially accesses the network device, the method in this embodiment may be applied regardless of which processing a compatibility problem occurs during execution, or the method in this embodiment may be applied only when a compatibility problem occurs during specific processing. For example, this may be for a message that needs to be correctly received by the terminal device from the network device in a process of initially accessing the network device, for example, an RRC connection setup message, a registration accept message, an authentication response message, or a security mode command message. The following uses this as an example to describe the method in this embodiment. It should be understood that this embodiment includes a plurality of parallel solutions. For brevity, only a part of the parallel solutions is reflected in the following description, and other parallel solutions are also applicable to this scenario.
(1) Sending a first message that is after an upgrade or a configuration change to the terminal device. Correspondingly, the terminal device receives the first message that is after the upgrade or the configuration change.
   The first message may be a key message received from the network device in a process in which the terminal device performs initial access. For example, the first message is an RRC connection setup message, a registration accept message, an authentication response message, a security mode command message, and the like.
(2) When the terminal device is incompatible with the first message that is after the upgrade or the configuration change, the terminal device sends fourth indication information to the network device. Correspondingly, the network device receives the fourth indication information. The fourth indication information indicates that the terminal device is incompatible with the first message that is after the upgrade or the configuration change, or the fourth indication information indicates a reason why the terminal device is incompatible with the first message that is after the upgrade or the configuration change.
   When at least one of the following items exists, the terminal device is incompatible with the first message that is after the upgrade or the configuration change: The terminal device cannot decode the first message that is after the upgrade or the configuration change, and the terminal device does not support the first message that is after the upgrade or the configuration change. Incompatibility of the terminal device with the first message that is after the upgrade or the configuration change may be considered as a compatibility problem between the terminal device and the network device.
(3) The network device sends the first message before the upgrade or the configuration change to the terminal device. Correspondingly, the terminal device receives the first message before the upgrade or the configuration change.

The terminal device may receive, based on an indication of the network device, the first message before the upgrade or the configuration change again, or may attempt to receive, after waiting for predetermined duration, the first message before the upgrade or the configuration change again. Then, the terminal device may continue the initial access by using the first message before the upgrade or the configuration change.

Embodiment 3 and Embodiment 4 are applicable to a process in which a network device updates system information. Before the technical solutions provided in this application are described, a process in which the network device updates the system information is described as an example. The technical solutions provided in this application may be applied to a process described below. It should be understood that a process in which the network device upgrades the system information or changes the configuration may change with evolution of the technical solution, and the technical solution provided in this application is not limited to the process described below.

FIG. 5 is a schematic diagram of a process in which a network device updates system information. The following uses an example in which the terminal device is LTE, the network device is a gNB, and the system information is system information block (system information, SI) 1 and system information (system information, SI) scheduled by using SIB1.
(1) The gNB sends, in a broadcast control channel (broadcast control channel, BCCH) modification period N, the SIB1 before updating and the SI before updating, and sends a system information updating indication. The system information updating indication indicates the LTE to obtain the system information again in the next BCCH modification period.
(2) The gNodeB sends the updated SIB 1 and the updated SI in the BCCH modification period (N+1).

In this manner, when the updating of the SIB1 is triggered by an upgrade or a configuration change of the gNB or the core network, the updated SIB1 may not be decoded by the UE or supported by the UE, thereby causing a UE access failure.

### Embodiment 3

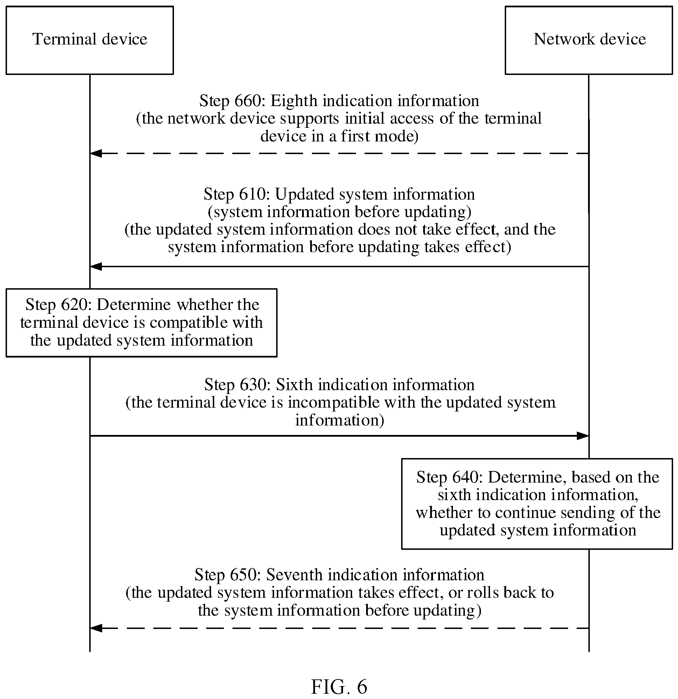

FIG. 6 is a schematic flowchart of a system information updating method. The method includes step 610, step 620, step 630, and step 640. The steps shown in FIG. 6 are described below.

In step 610, the network device sends updated system information to the terminal device. Correspondingly, the terminal device receives the updated system information.

The network device may not make the updated system information take effect in the first time period. Not making the updated system information take effect may be understood as: The system information before updating is still used. When the system information includes the parameter required by the terminal device to camp on the network device, the network device may still accept camping by the terminal device based on the parameter included in the system information before updating. When the system information includes the scheduling information of the other system information, the network device may still send the other system information at the resource location corresponding to the system information before updating. The system information may be a SIB 1. Not making the updated SIB1 take effect may include not making the SI message corresponding to the SIB scheduled by using the updated SIB1.

In addition, the network device may further send the system information before the updating in a period when the parameter corresponding to the updated system information is not enabled to take effect (that is, the foregoing first time period). A terminal device that is incompatible with the updated system information can perform initial access by using the system information before updating. For example, the network device may send, in each BCCH modification period of the at least one BCCH modification period, the system information before updating and the system information after updating, and do not enable the parameter corresponding to the updated system information to take effect in the at least one BCCH modification period.

In step 620, the terminal device determines whether the terminal device is compatible with the updated system information.

Whether the terminal device is compatible with the updated system information may be understood as: Whether the updated system information causes a compatibility problem between the terminal device and the network device. When at least one of the following items exists, the terminal device may determine that the terminal device is incompatible with the updated system information: The terminal device cannot decode the updated system information, the terminal device does not support the updated system information, and the terminal device determines, based on the updated system information, that the terminal device cannot camp on.

In step 630, when the terminal device determines that the terminal device is incompatible with the updated system information, the terminal device sends sixth indication information to the network device. Correspondingly, the network device receives the sixth indication information.

The sixth indication information may indicate that the terminal device is incompatible with the updated system information. In this case, the sixth indication information may be a random access preamble sent by the terminal device on a PRACH resource dedicated for reporting system information incompatibility (the third indication information is represented by using a PRACH resource dedicated for reporting system information incompatibility), or may be a random access preamble that is sent by the terminal device and that is generated based on a random access preamble sequence dedicated for reporting system information incompatibility (the third indication information is represented by using a random access preamble sequence dedicated for reporting system information incompatibility), or may be an uplink synchronization signal that is sent by the terminal device and that is dedicated to system information incompatibility reporting, for example, a sounding reference signal (sounding reference signal, SRS). A terminal device in an idle (idle) state may use these manners to report system information incompatibility.

Alternatively, the sixth indication information may indicate a reason why the terminal device is incompatible with the updated system information. In this case, the sixth indication information may be carried in physical layer signaling, MAC layer signaling, or RRC signaling, or may be carried in a message sent by using another radio access technology. A terminal device in a connected (connected) state may use these manners to report system information incompatibility. Reasons why the terminal device is incompatible with the updated system information may be classified into different types, and correspondences between these types and indexes may be pre-stored in the network device and the terminal device. The terminal device may determine a type of reason why the terminal device is incompatible with the updated system information, and send an index of this type as the sixth indication information to the network device. The network device can push the following information to the back-end server of the network device vendor, the operator control center, or the back-end server of the terminal vendor: a reason why the terminal device is incompatible with the updated system information and/or a reason why the terminal device is incompatible with the updated system information. The terminal device may further trigger call history record (call history record, CHR) log (log) reporting, and report the system information before updating and the system information after updating to the background of the terminal manufacturer.

In step 640, the network device determines, based on the sixth indication information, whether to continue sending of the updated system information.

The determining whether to continue sending of the updated system information may be understood as: Sending the updated system information or the system information before updating subsequently. When the updating of the system information is triggered by an upgrade or a configuration change of the gNB or the core network, the network device may determine, based on the sixth indication information, whether to continue the upgrade or the configuration change. The network device may determine whether to continue sending of the updated system information based on whether any terminal device is incompatible with the updated system information, or based on a quantity of terminal devices that are incompatible with the updated system information. It may be that, the terminal devices that need to feed back send random access preambles on at least one preconfigured PRACH resource, and the network device estimates, based on energy of the random access preambles on these PRACH resources, a quantity of terminal devices that are not compatible with the updated system information. It may also be that, the terminal device that needs to feed back send the random access preamble in a randomized manner in a time window, and the network device determines, based on a quantity of times of detecting the random access preamble in the time window, a quantity of terminal devices that are incompatible with the updated system information. When the quantity of terminal devices that are incompatible with the updated system information is greater than or equal to the preset threshold, the network device may determine not to continue sending of the updated system information.

As described above, the network device may not make the parameter corresponding to the updated system information take effect in the first time period, or may still send the system information before updating. When the network device determines to continue sending of the updated system information, the network device may enable the updated system information to take effect, or may stop sending the system information before updating. For example, the network device may send only the updated system information (that is, stop sending the system information before updating) in a next BCCH modification period of the foregoing at least one BCCH modification period, and enable the parameter corresponding to the updated system information to take effect. Certainly, if the network device determines not to continue sending of the updated system information (that is, roll back to the system information before updating), there is no way to make the updated system information take effect, and the like. The network device sends the system information before updating and makes the parameter corresponding to the system information before updating take effect. Just like before the system information updating.

The method may further include step 650. In step 650, the network device sends seventh indication information to the terminal device. When the network device determines to continue sending of the updated system information, the seventh indication information indicates that the updated system information takes effect. When the network device determines not to continue sending of the updated system information, the seventh indication information indicates the rollback to the system information before updating.

In addition, the method may further include step 660. In step 660, the network device sends eighth indication information to the terminal device. Correspondingly, the terminal device receives the eighth indication information. The eighth indication information indicates that the network device updates the system information in the third mode. The third mode may be referred to as a safe mode, a basic mode, a protection mode, a compatible mode, or the like. The terminal device may learn by using the eighth indication information. Used for indicating that the network device updates the system information in the third mode may be understood as: The third mode is available. When the updating of the system information is triggered by upgrade or configuration change of the gNB or the core network, the eighth indication information may indicate the network device to perform upgrade or configuration change in the third mode. The network device may implement the switch of the third mode by using information indicating that the third mode is available and information indicating that the third mode is unavailable. The eighth indication information may be carried in SIB1 downlink control information (downlink control information, DCI), a master information block (master information block, MIB), or other signaling.

By applying the method in this embodiment, when the updating of system information is caused by an upgrade or a configuration change of the network device, the terminal device may feed back incompatibility with the updated system information to the network device, so that the network device may suspend the upgrade or the configuration change, and roll back the system information to the system information before updating. In this way, a possibility that the terminal device cannot initially access the terminal device or cannot maintain the connection to the network device because the updated system information is incompatible with the terminal device is reduced. In addition, although the network device sends the updated system information to the terminal device, the network device temporarily does not make the updated system information take effect, and still sends the system information before updating. In this way, a terminal device that is incompatible with the updated system information in this period of time can still use the system information before updating to initiate initial access to the network device or keep a connection to the network device.

As described above, this embodiment is applicable to the process in which the network device updates system information shown in FIG. 5. The following describes the method in this embodiment by using this as an example. It should be understood that this embodiment includes a plurality of parallel solutions. For brevity, only a part of the parallel solutions is reflected in the following description, and other parallel solutions are also applicable to this scenario.

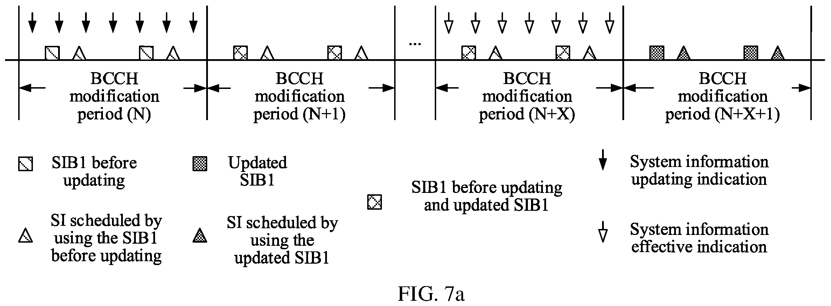

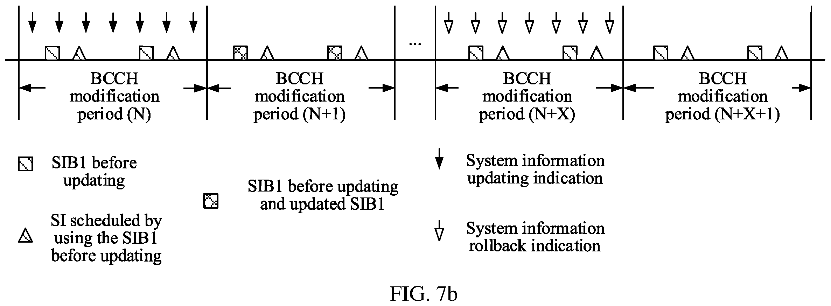

FIG. 7a and FIG. 7b are schematic diagrams of another process in which a network device updates system information. FIG. 7a shows a case in which the gNB determines to continue an upgrade or a configuration change, and FIG. 7b shows a case in which the gNB determines to suspend an upgrade or a configuration change.
(1) As shown in FIG. 7a and FIG. 7b, the gNB sends, in a BCCH modification period N, an SI message corresponding to the SIB1 before updating and the SIB block scheduled by using the SIB 1 before updating, and sends a system information updating indication. The system information updating indication indicates the UE to obtain the system information again in the next BCCH modification period. N is a positive integer.
(2) As shown in FIG. 7a and FIG. 7b, the gNB sends, in BCCH modification periods N+1 to N+X-1, an SI message corresponding to the updated SIB1, the SIB1 before updating, and the SIB block scheduled by using the SIB1 before updating. X is a positive integer greater than or equal to 2.
(3) As shown in FIG. 7a and FIG. 7b, the UE determines whether the UE is compatible with the updated SIB1, and feeds back the updated SIB 1 to the gNB when determining that the UE is incompatible with the updated SIB1. Correspondingly, the gNB determines, based on the feedback of the UE, whether to continue sending of the updated SIB1.
(4) As shown in FIG. 7a, when determining to continue sending of the updated SIB1, the gNB sends, in the BCCH modification period (N+X), an SI message corresponding to the updated SIB1, the SIB1 before updating, and the SIB block scheduled by using the SIB1 before updating, and sends the system information effective indication. This system information effective indication indicates that SIB1 takes effect in the next BCCH modification period. Subsequently, the gNB sends, in the BCCH modification period N+X+1, an SI message corresponding to the updated SIB1 and SIB block scheduled by using the updated SIB1, and the SI message corresponding to the SIB1 before updating and the SIB block scheduled by using the SIB1 before updating are no longer sent.
   Herein, the gNB may not send the system information effective indication, and directly send the SI message corresponding to the updated SIB1 and the SIB block scheduled by using the updated SIB1 starting from the BCCH modification period N+X+1. In addition, the SI message corresponding to the SIB1 before updating and the SIB block scheduled by using the SIB1 before updating are no longer sent. In addition, the gNB may alternatively start from the BCCH modification period N+X instead of the BCCH modification period N+X+1 to send the updated SIB1 and the SI message corresponding to the SIB block scheduled in the updated SIB1. In addition, the SIB1 before updating and the SI message corresponding to the SIB block scheduled in the SIB1 before updating are no longer sent.
(5) As shown in FIG. 7b, when determining not to continue sending of the updated SIB1, the gNB sends, in the BCCH modification period N+X, the SI message corresponding to the SIB1 before updating and the SIB block scheduled by using the SIB1 before updating, and sends a system information rollback indication. The system information rollback indication indicates that the SIB1 is rolled back in the current BCCH modification period. Subsequently, the gNB continues to send, in the modification period N+X+1, the SI corresponding to the SIB1 before updating and the SIB block scheduled by using the SIB1 before updating.

Herein, the gNB may not send the system information rollback indication, but directly send the SI message corresponding to the SIB1 before updating and the SIB block scheduled by using the SIB1 before updating starting from the BCCH modification period N+X.

### Embodiment 4

The main difference between Embodiment 4 and Embodiment 3 lies in that: In Embodiment 3, a period of buffer period exists between sending and taking effect of the updated system information, so that the terminal device can determine and feed back, by using the period of time, whether the updated system information is compatible. In Embodiment 4, such a buffer period does not exist, but the terminal device may still determine and feed back whether the terminal device is compatible with the updated system information.

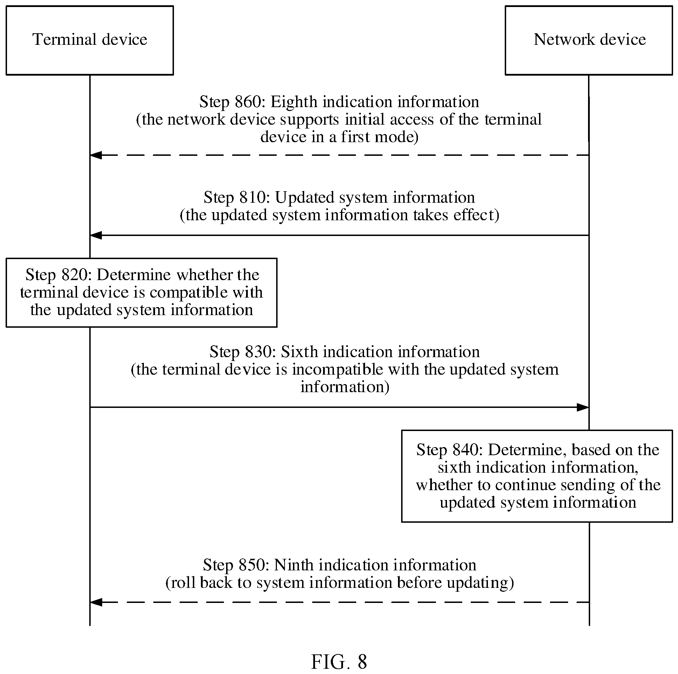

FIG. 8 is a schematic flowchart of another system information updating method. The method includes step 810, step 820, step 830, step 840, and step 850. The steps shown in FIG. 8 are described below. It should be understood that, because some terms and processing in Embodiment 4 are similar to some terms and processing in Embodiment 3, similar terms or processing are not repeatedly described below.

Step 810: The network device sends updated system information to the terminal device. Correspondingly, the terminal device receives the updated system information. Step 810 is similar to step 610, but there is no case in which the updated system information does not take effect temporarily. When the system information includes the information required by the terminal device to camp on the network device, the network device accepts that the terminal device camp on the network device based on the updated system information. Alternatively, when the system information includes scheduling information of the other system information, the network device sends the other system information at the resource location corresponding to the updated system information.

In step 820, the terminal device determines whether the terminal device is compatible with the updated system information. Step 820 is similar to step 620 described above.

In step 830, when the terminal device determines that the terminal device is incompatible with the updated system information, the terminal device sends the sixth indication information to the network device. Correspondingly, the network device receives the sixth indication information. Step 830 is similar to step 630 described above.

In step 840, the network device determines, based on the sixth indication information, whether to continue sending of the updated system information. Step 840 is similar to step 640 described above.

The method may further include step 850. In step 850, when determining not to continue sending of the updated system information, the network device sends ninth indication information to the terminal device, where the ninth indication information indicates the rollback to the system information before updating. Regardless of whether the terminal device is compatible with the updated system information, after receiving the ninth indication information, the terminal device needs to communicate with the network device by using the system information parameter corresponding to the system information before updating. The terminal device may back up the system information before updating in advance. Backing up the system information before updating may be backing up the system information itself, or may be backing up a parameter corresponding to the system information. After receiving the ninth indication information, the terminal device may communicate with the network device by using the system information parameter corresponding to the backup system information before updating.

The ninth indication information may reuse the system information updating indication in the conventional technologies. In this case, the ninth indication information is used to indicate the terminal device to re-obtain the system information in a next BCCH modification period. After receiving the system information updating indication, the terminal device re-obtains the system information before updating in a next period. If the terminal device has not backed up the system information before updating, the terminal device may re-obtain the system information before updating. If the terminal device has backed up the system information before updating, the terminal device does not need to re-obtain the system information.

In addition, the method may further include step 860. In step 860, the network device sends eighth indication information to the terminal device. Correspondingly, the terminal device receives the eighth indication information. Step 860 is similar to step 660 described above. The foregoing backing up, by the terminal device, the system information before updating may be performed in response to receiving the eighth indication information.

By applying the method in this embodiment, when the updating of system information is caused by an upgrade or a configuration change of the network device, the terminal device may feed back incompatibility with the updated system information to the network device, so that the network device may suspend the upgrade or the configuration change. In this way, a possibility that the terminal device cannot initially access the terminal device or cannot maintain the connection to the network device because the updated system information is incompatible with the terminal device is reduced. In addition, even if the terminal device is incompatible with the updated system information, the terminal device may still initiate initial access to the network device or keep a connection to the network device by using the backup system information before updating.

As described above, this embodiment is applicable to the process in which the network device updates system information shown in FIG. 5. The following describes the method in this embodiment by using this as an example. It should be understood that this embodiment includes a plurality of parallel solutions. For brevity, only a part of the parallel solutions is reflected in the following description, and other parallel solutions are also applicable to this scenario.

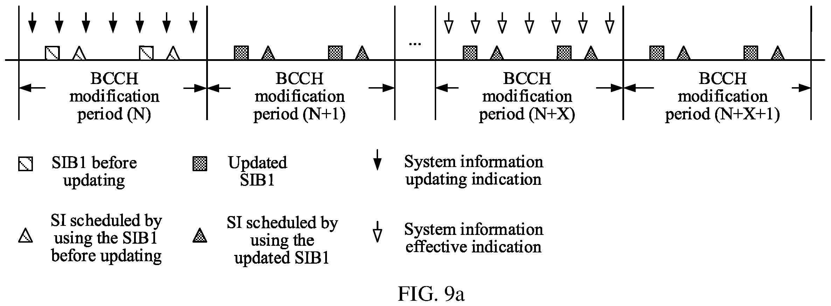

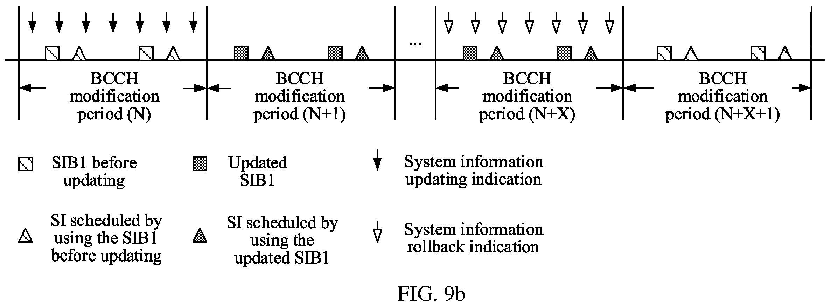

FIG. 9a and FIG. 9b are schematic diagrams of still another process in which a network device updates system information. FIG. 9a is a case in which the gNB determines that the upgrade can be performed, and FIG. 9b is a case in which the gNB determines that the upgrade cannot be performed.
(1) As shown in FIG. 9a and FIG. 9b, the gNB sends, in a BCCH modification period N, an SI message corresponding to the SIB1 before updating and an SIB block scheduled by using the SIB 1 before updating, and sends a system information updating indication. The system information updating indication indicates the UE to obtain the system information again in the next BCCH modification period.
(2) As shown in FIG. 9a and FIG. 9b, the gNB sends, in BCCH modification periods N+1 to N+X-1, an SI message corresponding to the updated SIB1 and the SIB block scheduled by updated SIB 1.
(3) As shown in FIG. 9a and FIG. 9b, the UE determines whether the UE is compatible with the updated SIB1, and feeds back the updated SIB1 to the gNB when determining that the UE is incompatible with the updated SIB1. Correspondingly, the gNB determines, based on the feedback of the UE, whether to continue sending of the updated SIB 1.
(4) As shown in FIG. 9a, when determining to continue sending of the updated SIB1, the gNB continues sending, in BCCH modification periods N+X and N+X+1, an SI message corresponding to the updated SIB1 and the SIB block scheduled by updated SIB1.
(5) As shown in FIG. 9b, when determining not to continue sending of the updated SIB1, the gNB continues sending, in BCCH modification period N+X, an SI message corresponding to the updated SIB1 and the SIB block scheduled by updated SIB1, and sends a system information rollback indication. The system information rollback indication indicates that SIB1 is rolled back in the next BCCH modification period. Subsequently, the gNB sends, in the modification period N+X+1, an SI message corresponding to the SIB1 before updating and the SIB block scheduled by using the SIB 1 before updating.

Herein, the gNB may not send the system information effective indication, and directly send an SI message corresponding to the SIB1 before updating and the SIB block scheduled by using the SIB1 before updating starting from the BCCH modification period N+X+1. In addition, the gNB may alternatively start from the BCCH modification period N+X instead of the BCCH modification period N+X+1 to send an SI message corresponding to the SIB 1 before updating and the SIB block scheduled by using the SIB1 before updating.

It should be understood that the solutions in embodiments of this application may be properly combined for use, and explanations or descriptions of terms in the embodiments may be mutually referred to or explained in the embodiments. This is not limited. Some of the foregoing steps have been specified to be similar to another step, or terms or processing in some steps have been specified to be understood with reference to descriptions in another step, but other terms or processing may also be understood with reference to other similar terms or processing.

In addition, sequence numbers of the foregoing processes do not mean execution sequences in various embodiments of this application. The execution sequences of the processes should be determined based on functions and internal logic of the processes. Various numbers or sequence numbers involved in the foregoing processes are merely distinguished for ease of description, and should not be construed as any limitation on the implementation processes of embodiments of this application.

In addition, in the foregoing described method embodiments, that the execution body is merely the network device and the terminal device is used as an example. In addition, or function module that can invoke and execute a program in a network device and a terminal device, for example, chips in the network device and the terminal device.

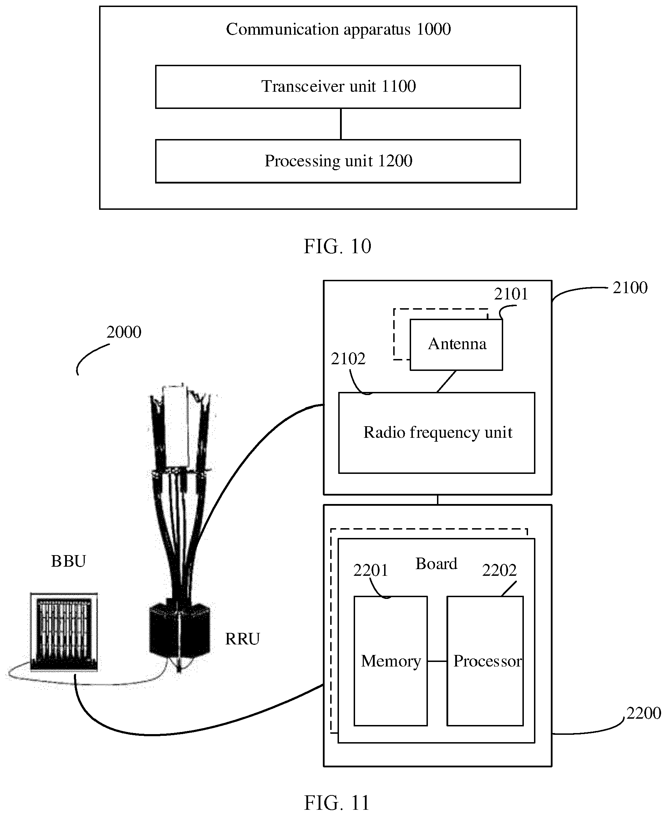

The methods provided in embodiments of this application are described above in detail with reference to FIG. 2A and FIG. 2B to FIG. 9b. An apparatus provided in embodiments of this application is described in detail below with reference to FIG. 10 to FIG. 12.

FIG. 10 is a schematic block diagram of a communication apparatus. As shown in FIG. 10, the communication apparatus 1000 may include the transceiver unit 1100 and the processing unit 1200.

The communication apparatus 1000 may correspond to the terminal device in the method provided in embodiments of this application. The communication apparatus 1000 may be a terminal device or a chip configured in the terminal device. Units in the communication apparatus 1000 are separately configured to implement operations performed by the terminal device in a corresponding method.

When corresponding to Embodiment 1, the processing unit 1200 may be configured to: obtain a first group of parameters corresponding to the first mode. The transceiver unit 1100 may be configured to: when a compatibility problem exists between the terminal device and the network device, initiate initial access to the network device based on the first group of parameters.

When corresponding to Embodiment 2, the transceiver unit 1100 may be configured to: when a compatibility problem exists between the terminal device and the network device, send the fourth indication information to the network device. The transceiver unit 1100 may be further configured to: after the terminal device adjusts the parameters used for accepting the initial access of the terminal device, continue the initial access to the network device.

Alternatively, when corresponding to Embodiment 2, the transceiver unit 1100 may be configured to: receive a first message that is after an upgrade or a configuration change from a network device. The transceiver unit 1100 may be further configured to: when the terminal device is incompatible with the first message that is after the upgrade or the configuration change, send fourth indication information to the network device. The transceiver unit 1100 may be further configured to: receive a first message before the upgrade or the configuration change from the terminal device.
when corresponding to Embodiment 3 or Embodiment 4, the transceiver unit 1100 may be configured to: receive updated system information from the network device. The processing unit 1200 may be configured to: determine whether the terminal device is compatible with the updated system information. The transceiver unit 1100 may be further configured to: when determining that the terminal device is incompatible with the updated system information, send the sixth indication information to the network device.

The communication apparatus 1000 may correspond to the network device in the method provided in embodiments of this application. The communication apparatus 1000 may be a network device or a chip configured in the network device. Units in the communication apparatus 1000 are respectively configured to implement operations performed by the network device in a corresponding method.

Corresponding to Embodiment 1, the processing unit 1200 may be configured to: obtain the second group of parameters corresponding to the first mode. The transceiver unit 1100 may be configured to: when a compatibility problem exists between the terminal device and the network device, accept, based on the second group of parameters, initial access initiated by the terminal device.

When corresponding to Embodiment 2, the transceiver unit 1100 may be configured to: receive the fourth indication information from the terminal device. The transceiver unit 1100 may be further configured to: adjust a parameter used to accept initial access of the terminal device. The transceiver unit 1100 may be further configured to: continue accept of initial access of the terminal device.

Alternatively, when corresponding to Embodiment 2, the transceiver unit 1100 may be configured to: send the first message that is after the upgrade or the configuration change to the terminal device. The transceiver unit 1100 may be further configured to: receive the fourth indication information from the terminal device. The transceiver unit 1100 may be further configured to: send the first message before the upgrade or the configuration change to the terminal device.
when corresponding to Embodiment 3 or Embodiment 4, the transceiver unit 1100 may be configured to: send updated system information to the terminal device. The transceiver unit 1100 may be further configured to: receive sixth indication information from the terminal device. The processing unit 1200 may be configured to: determine, based on the sixth indication information, whether to continue sending of the updated system information.

It should be further understood that a specific process in which each unit performs the foregoing corresponding step is described in detail in the foregoing method embodiments, and for brevity, details are not described herein.

It should be further understood that, when the communication apparatus 1000 is a network device, the transceiver unit 1100 in the communication apparatus 1000 may correspond to the RRU 3100 in the network device 2000 shown in FIG. 11. The processing unit 1200 in the communication apparatus 1000 may correspond to the BBU 3200 in the network device 2000 shown in FIG. 11. When the communication apparatus 1000 is a chip configured in the network device, the transceiver unit 1100 in the communication apparatus 1000 may be an input/output interface.

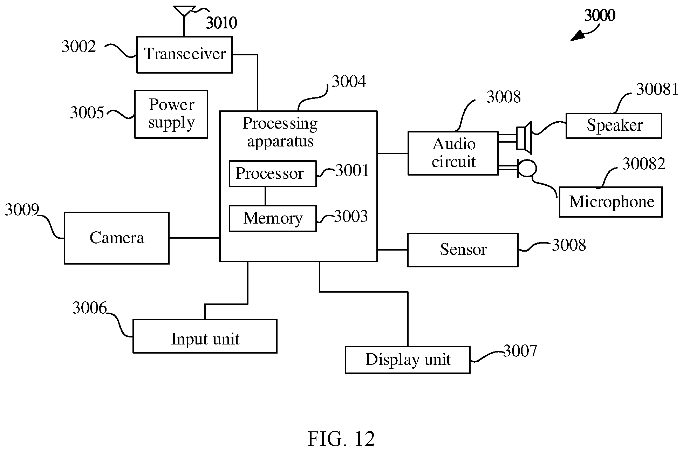

It should be further understood that, when the communication apparatus 1000 is a terminal device, the transceiver unit 1100 in the communication apparatus 1000 may correspond to the transceiver 3002 in the terminal device 3000 shown in FIG. 12. The processing unit 1200 in the communication apparatus 1000 may correspond to the processor 3001 in the terminal device 3000 shown in FIG. 12.

FIG. 11 is a schematic structural diagram of the network device 2000. The network device 2000 may be applied to the system shown in FIG. 1, to perform the functions of the network device in the foregoing method embodiment. As shown in the figure, the network device 2000 may include one or more radio frequency units, such as a remote radio unit (remote radio unit, RRU) 2100 and one or more baseband units (BBUs) (also referred to as distributed units (DUs)) 2200. The RRU 2100 may be referred to as a transceiver unit or a communication unit, and correspond to the transceiver unit 1100 in FIG. 10. Alternatively, the transceiver unit 2100 may also be referred to as a transceiver device, a transceiver circuit, a transceiver, or the like, and may include at least one antenna 2101 and a radio frequency unit 2102. Alternatively, the transceiver unit 2100 may include a receiving unit and a sending unit. The receiving unit may correspond to a receiver (or referred to as a receiver device or a receiver circuit), and the sending unit may correspond to a transmitter (or referred to as a transmitter device or a transmitter circuit). The RRU 2100 is mainly configured to receive and send a radio frequency signal and convert a radio frequency signal and a baseband signal. The BBU 2200 is mainly configured to perform baseband processing, control a network device, and the like. The RRU 2100 and the BBU 2200 may be physically disposed together, or may be physically disposed separately, that is, a distributed base station.

The BBU 2200 is a control center of the network device, may also be referred to as a processing unit. It may correspond to the processing unit 1200 in FIG. 10, and is mainly configured to complete a baseband processing function, such as channel coding, multiplexing, modulation, and spreading. For example, the BBU (processing unit) may be configured to control the network device to perform an operation procedure of the network device in the foregoing method embodiment.

In an example, the BBU 2200 may be formed by one or more boards. The multiple boards may jointly support a radio access network (such as an LTE network) of a single access standard, or may separately support radio access networks of different access standards (such as LTE, 5G, or other networks). The BBU 2200 further includes a memory 2201 and a processor 2202. The memory 2201 is configured to store necessary instructions and data. The processor 2202 is configured to control the network device to perform a necessary action, for example, configured to control the network device to perform an operation procedure of the network device in the foregoing method embodiment. The memory 2201 and the processor 2202 may serve one or more boards. That is, a memory and a processor may be separately disposed on each board. Alternatively, multiple boards may share a same memory and a same processor. In addition, necessary circuits may be arranged on each board.

It should be understood that the network device 2000 shown in FIG. 11 can implement processes related to the network device in the foregoing method embodiments. Operations or functions of the modules in the network device 2000 are separately used to implement corresponding procedures in the foregoing method embodiment. For details, refer to descriptions in the foregoing method embodiments. To avoid repetition, detailed descriptions are appropriately omitted herein.

The BBU 2200 may be configured to perform an action that is internally implemented by the network device and described in the foregoing method embodiment, and the RRU 2100 may be configured to perform an action that is sent by the network device to the terminal device or received from the terminal device and described in the foregoing method embodiment. For details, refer to the description in the foregoing method embodiment, and details are not described herein again.

The foregoing describes the structure by using an example in which the network device is an access network device. When the network device is an AMF, the network device may include the memory 2201, the processor 2202, and the communication interface in FIG. 11. The processor 2202 may invoke the instruction in the memory 2201, to implement processes related to the network device in the foregoing method embodiment.

FIG. 12 is a schematic structural diagram of the terminal device 3000. As shown in the figure, the terminal device 3000 includes the processor 3001 and the transceiver 3002. Alternatively, the terminal device 3000 may further include the memory 3003. The processor 3001, the transceiver 3002, and the memory 3003 may communicate with each other by using an internal connection path, to transmit a control signal and/or a data signal. The memory 3003 is configured to store a computer program. The processor 3001 is configured to invoke and run the computer program from the memory 3003, so as to control the transceiver 3002 to receive and send a signal.

The processor 3001 and the memory 3003 may be combined into a processing apparatus 3004, and the processor 3001 is configured to execute the program code stored in the memory 3003 to implement the foregoing function. It should be understood that the processing apparatus 3004 shown in the figure is merely an example. In specific implementation, the memory 3003 may alternatively be integrated into the processor 3001, or may be independent of the processor 3001. This is not limited in this embodiment of this application.

The terminal device 3000 may further include an antenna 3010, configured to send, by using a radio signal, uplink data or uplink control signaling output by the transceiver 3002.

It should be understood that the terminal device 3000 shown in FIG. 12 can implement processes related to the terminal device in the foregoing method embodiments. Operations or functions of the modules in the terminal device 3000 are separately used to implement corresponding procedures in the foregoing method embodiments. For details, refer to descriptions in the foregoing method embodiments. To avoid repetition, detailed descriptions are appropriately omitted herein.

Alternatively, the terminal device 3000 may further include a power supply 3005, configured to provide power for various components or circuits in the terminal device.

In addition, to make functions of the terminal device more perfect, the terminal device 3000 may further include one or more of an input unit 3006, a display unit 3007, an audio frequency circuit 3008, a camera 3009, a sensor 3008, and the like. The audio frequency circuit 3008 may further include a loudspeaker 30081, a microphone 30082, and the like.

It should be understood that the processing apparatus 3004 may be a chip. For example, processing apparatus 3004 may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished through a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

The memory 3003 may be a volatile memory or a non-volatile memory, or may include both a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM) that is used as an external cache. By way of example, but not limitation, many forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory in the systems and methods described in this specification includes but is not limited to memories of these and any other appropriate types.

An embodiment of this application further provides a computer program product. The computer program product includes a computer program which, when runs on a computer, causes the computer to perform the method performed by the network device or the terminal device in the foregoing method embodiments.

An embodiment of this application further provides a computer-readable storage medium. The computer-readable storage medium stores a computer program which, when runs on a computer, causes the computer to perform the method performed by the network device or the terminal device in the foregoing method embodiments.

An embodiment of this application further provides a system. The system includes a terminal device and a network device.

An embodiment of this application further provides a communication apparatus. The communication apparatus includes a processor and a storage medium. The storage medium stores an instruction which, when executed by the processor, the communication apparatus performs the method performed by the network device or the terminal device in the foregoing method embodiments.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures, or functions based on embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media.

In this specification, terms such as "component", "module", and "system" are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process or an execution thread, and a component may be located on one computer or distributed between two or more computers. In addition, these components may be executed from various computer-readable media that store various data structures. For example, the components may communicate by using a local or remote process and based on, for example, a signal having one or more data packets (for example, data from two components interacting with another component in a local system, a distributed system, or across a network such as the internet interacting with other systems by using the signal).

It should be understood that "embodiment" mentioned throughout the specification means that a particular feature, structure, or characteristic related to the embodiment is included in at least one embodiment of this application. Therefore, the embodiments throughout the specification may not necessarily refer to the same embodiment. In addition, these particular features, structures, or characteristics may be combined in a proper manner in any one or more embodiments.

It should be understood that the numbers "first", "second", and the like in embodiments of this application are merely used to distinguish between different objects, for example, to distinguish between different network devices, and do not constitute a limitation on the scope of embodiments of this application. This embodiment of this application is not limited thereto.

In addition, in this application, "when" and "if" all refer to corresponding processing performed by the network element in an objective case, and are not intended to limit a time, and are not required to perform a determining action during implementation of the network element, nor does it imply that there is any other limitation.

In addition, in this application, "at least one" refers to one or more, and "a plurality of" refers to two or more.

It should be further understood that, in embodiments of this application, "B corresponding to A" indicates that B is associated with A, and B may be determined based on A. However, it should further be understood that determining A according to B does not mean that B is determined according to A only; that is, B may also be determined according to A and/or other information.

In addition, the term "and/or" in this specification is merely an association relationship for describing associated objects, and represents that three relationships may exist. For example, A and/or B may represent the following cases: only A exists, both A and B exist, and only B exists. In addition, the character "/" in this application may represent that the associated objects at front and rear are in an "or" relationship. For example, when "/" is used for "and/or", it may also represent that the associated objects at front and rear are in an "or" relationship. For example, when "/" is used for "SRB0/1/2".

When an expression similar to "at least one of A, B, and C" appears in this application, unless otherwise specified, the expression is usually used to express any one of the following: A; B; C; A and B; A and C; B and C; A, B and C; A and A; A, A and A; A, A and B; A, A and C, A, B and B; A, C and C; B and B, B, B and B, B and C, C and C; and C, C and C, and other combinations of A, B and C. The above uses three elements A, B, and C as an example to illustrate optional items of the project. When there are more elements in the expression, the meaning of the expression may be obtained according to the foregoing rules.

It may be understood that, in embodiments of this application, a terminal device and/or a network device may perform some or all of the steps in embodiments of this application. These steps or operations are merely examples. In embodiments of this application, other operations or variations of various operations may be performed. In addition, the steps may be performed in different sequences presented in embodiments of this application, and it is possible that not all operations in embodiments of this application need to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a computer-readable storage medium, and includes several instructions for instructing a computer device (which may be a personal computer, a server, a network device, or the like) to perform all or a part of the steps of the methods described in embodiments of this application. The computer-readable storage medium may be a magnetic storage device, an optical disk, a smart card, a flash storage device, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless network access method, comprising:
obtaining a first group of parameters corresponding to a first mode, wherein the first group of parameters are predefined parameters, or the first group of parameters are parameters used by a terminal device during latest successful initial access to a network device; and
when a compatibility problem exists between the terminal device and the network device, initiating, based on the first group of parameters, initial access to the network device.

2. The method according to claim 1, wherein the compatibility problem comprises at least one of the following: the terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

3. The method according to claim 1 or 2, further comprising:
determining the first group of parameters from at least two groups of parameters based on at least one of the following: a capability of the terminal device, a capability of the network device, a version of the terminal device, and a version of the network device.

4. The method according to any one of claims 1 to 3, further comprising:
receiving first indication information from the network device, wherein the first indication information indicates the first group of parameters, or the first indication information indicates that the network device supports initial access of the terminal device in the first mode.

5. The method according to any one of claims 1 to 4, further comprising:
receiving second indication information from the network device, wherein the second indication information indicates that a compatibility problem exists between the terminal device and the network device, or the second indication information indicates a reason for a compatibility problem between the terminal device and the network device.

6. The method according to any one of claims 1 to 4, further comprising:
sending third indication information to the network device, wherein the third indication information indicates that there is a compatibility problem exists between the terminal device and the network device, or the third indication information indicates a reason for a compatibility problem between the terminal device and the network device.

7. A wireless network access method, comprising:
obtaining a second group of parameters corresponding to a first mode, wherein the second group of parameters are predefined parameters, or the second group of parameters are parameters used by a network device during latest successful accept of initial access initiated by a terminal device; and
when a compatibility problem exists between the terminal device and the network device, accepting, based on the second group of parameters, initial access initiated by the terminal device.

8. The method according to claim 7, wherein the compatibility problem comprises at least one of the following: the terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

9. The method according to claim 7 or 8, further comprising:
determining the second group of parameters from at least two groups of parameters based on at least one of the following: a capability of the terminal device, a capability of the network device, a version of the terminal device, and a version of the network device.

10. The method according to any one of claims 7 to 9, further comprising:
sending first indication information to the terminal device, wherein the first indication information indicates a first group of parameters used by the terminal device during initiation of initial access to the network device in the first mode, and the first group of parameters correspond to the second group of parameters; or the first indication information indicates that the network device supports initial access of the terminal device in the first mode.

11. The method according to any one of claims 7 to 10, further comprising:
sending second indication information to the terminal device, wherein the second indication information indicates that a compatibility problem exists between the terminal device and the network device, or the second indication information indicates a reason for a compatibility problem between the terminal device and the network device.

12. The method according to any one of claims 7 to 11, further comprising:
receiving third indication information from the terminal device, wherein the third indication information indicates that a compatibility problem exists between the terminal device and the network device, or the third indication information indicates a reason for a compatibility problem between the terminal device and the network device.

13. A wireless network access apparatus, comprising:
a processing module, configured to obtain a first group of parameters corresponding to a first mode, wherein the first group of parameters are predefined parameters, or the first group of parameters are parameters used by a terminal device during latest successful initial access to a network device; and
a transceiver module, configured to initiate, based on the first group of parameters, initial access to the network device when there is a compatibility problem between the terminal device and the network device.

14. The apparatus according to claim 13, wherein the compatibility problem comprises at least one of the following: the terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

15. The apparatus according to claim 13 or 14, wherein the processing module is further configured to:
determine the first group of parameters from at least two groups of parameters based on at least one of the following: a capability of the terminal device, a capability of the network device, a version of the terminal device, and a version of the network device.

16. The apparatus according to any one of claims 13 to 15, wherein the transceiver module is further configured to:
receive first indication information from the network device, wherein the first indication information indicates the first group of parameters, or the first indication information indicates that the network device supports initial access of the terminal device in the first mode.

17. The apparatus according to any one of claims 13 to 16, wherein the transceiver module is further configured to:
receive second indication information from the network device, wherein the second indication information indicates that a compatibility problem exists between the terminal device and the network device, or the second indication information indicates a reason for a compatibility problem between the terminal device and the network device.

18. The apparatus according to any one of claims 13 to 16, wherein the transceiver module is further configured to:
send third indication information to the network device, wherein the third indication information indicates that there is a compatibility problem exists between the terminal device and the network device, or the third indication information indicates a reason for a compatibility problem between the terminal device and the network device.

19. A wireless network access apparatus, comprising:
a processing module, configured to obtain a second group of parameters corresponding to a first mode, wherein the second group of parameters are predefined parameters, or the second group of parameters are parameters used by a network device during latest successful accept of initial access initiated by a terminal device; and
a transceiver module, configured to: when a compatibility problem exists between the terminal device and the network device, accept, based on the second group of parameters, initial access initiated by the terminal device.

20. The apparatus according to claim 19, wherein the compatibility problem comprises at least one of the following: the terminal device is incompatible with system information that is after an upgrade or a configuration change, the terminal device is incompatible with a registration-related message that is after an upgrade or a configuration change, the terminal device is incompatible with a connection establishment-related message that is after an upgrade or a configuration change, and the network device is incompatible with capability information reported by the terminal device.

21. The apparatus according to claim 19 or 20, wherein further comprising:
determining the second group of parameters from at least two groups of parameters based on at least one of the following: a capability of the terminal device, a capability of the network device, a version of the terminal device, and a version of the network device.

22. The apparatus according to any one of claims 19 to 21, wherein further comprising:
sending first indication information to the terminal device, wherein the first indication information indicates a first group of parameters used by the terminal device during initiation of initial access to the network device in the first mode, and the first group of parameters correspond to the second group of parameters; or the first indication information indicates that the network device supports initial access of the terminal device in the first mode.

23. The apparatus according to any one of claims 19 to 22, wherein further comprising:
sending second indication information to the terminal device, wherein the second indication information indicates that a compatibility problem exists between the terminal device and the network device, or the second indication information indicates a reason for a compatibility problem between the terminal device and the network device.

24. The apparatus according to any one of claims 19 to 23, wherein further comprising:
receiving third indication information from the terminal device, wherein the third indication information indicates that a compatibility problem exists between the terminal device and the network device, or the third indication information indicates a reason for a compatibility problem between the terminal device and the network device.

25. A wireless access method, comprising:
receiving a first message that is after an upgrade or a configuration change from a network device;
when the terminal device is incompatible with the first message that is after the upgrade or configuration change, sending fourth indication information to the network device, wherein the fourth indication information indicates that the terminal device is incompatible with the first message that is after the upgrade or configuration change, or the fourth indication information indicates a reason why the terminal device is incompatible with the first message that is after the upgrade or the configuration change; and
receiving a first message before the upgrade or the configuration change from the network device.

26. A wireless access method, comprising:
sending a first message that is after an upgrade or a configuration change to a terminal device;
receiving fourth indication information, wherein the fourth indication information indicates that the terminal device is incompatible with the first message that is after the upgrade or the configuration change, or the fourth indication information indicates a reason why the terminal device is incompatible with the first message that is after the upgrade or the configuration change; and
sending a first message before the upgrade or the configuration change to the terminal device.

27. A wireless network access apparatus, comprising:
a transceiver unit, configured to receive a first message that is after an upgrade or a configuration change from a network device, wherein
the transceiver unit is further configured to: when the terminal device is incompatible with the first message that is after the upgrade or configuration change, send fourth indication information to the network device, wherein the fourth indication information indicates that the terminal device is incompatible with the first message that is after the upgrade or configuration change, or the fourth indication information indicates a reason why the terminal device is incompatible with the first message that is after the upgrade or the configuration change; and
the transceiver unit is further configured to: receive a first message before the upgrade or the configuration change from the network device.

28. A wireless network access apparatus, comprising:
a transceiver unit, configured to send a first message that is after an upgrade or a configuration change to a terminal device, wherein
the transceiver unit is further configured to: receive fourth indication information, wherein the fourth indication information indicates that the terminal device is incompatible with the first message that is after the upgrade or the configuration change, or the fourth indication information indicates a reason why the terminal device is incompatible with the first message that is after the upgrade or the configuration change; and
send a first message before the upgrade or the configuration change to the terminal device.

29. A communication apparatus, comprising a processor and a storage medium, wherein the storage medium stores an instruction, and the instruction, when executed by the processor, enables the communication apparatus to perform the method according to any one of claims 1 to 12, 25, and 26.

30. A computer-readable storage medium, storing a computer program, wherein when the computer program is run, a communication apparatus is enabled to perform the method according to any one of claims 1 to 12, 25, and 26.

31. A computer program product, comprising a computer program, wherein the computer program, when run on a computer, enables the computer to perform the method according to any one of claims 1 to 12, 25, and 26.
